# FASCICULE DE BREVET EUROPEEN

(11) **EP 0 663 148 B1**
(45) Date de publication et mention de la délivrance du brevet: **15.03.2000**
(21) Numéro de dépôt: 94420361.1
(22) Date de dépôt: 16.12.1994
(51) Int. Cl.: A01N 43/653

(54) **Composition fongicide à base d'un 3,5-dichloranilide comme l'iprodione et de bromocunazole**
Fungizide Zusammensetzungen aus einem 3,5-Dichloranilid wie dem Iprodion und Bromocunazol
Fungicidal compositions based on a 3,5-dichloroanilide like iprodione and bromocunazole

(30) Priorité: 14.01.1994 FR 9400565
(43) Date de publication de la demande: 19.07.1995
(73) Titulaire: RHONE-POULENC AGROCHIMIE, 69009 Lyon (FR)
(72) Inventeur: Duvert, Patrice, F-69004 Lyon (FR)

(56) Documents cités:
- EP-A- 0 230 844
- EP-A- 0 433 194
- EP-A- 0 511 167
- DE-A- 3 700 924
- FR-A- 2 516 350
- CHEMICAL ABSTRACTS, vol. 104, no. 1, 6 Janvier 1986, Columbus, Ohio, US; abstract no. 2081, P.L.SANDERS ET AL. 'Reduced-rate fungicide mixtures to delay fungicide resistance and to control selected turfgrass diseases'

## Description

La présente invention a pour objet une composition fongicide utile pour le traitement des attaques fongiques des cultures, à base d'un composé dont la formule comprend un groupe triazole. Elle concerne également un procédé de traitement des cultures ayant le même but.

Les composés dont la formule comprend un groupe triazole sont bien connus des agriculteurs notamment pour leur efficacité contre l'ensemble des maladies atteignant ou susceptibles d'atteindre l'orge, telles que l'oïdium, la rouille, la rhynchosporiose et l'helminthosporiose.

Cependant l'efficacité de ces composés sur helminthosporiose est souvent jugée insuffisante.

Or, cette dernière maladie connaît précisément depuis quelques années un très fort développement en raison de l'évolution des pratiques culturales, telle l'intensification des cultures, avec l'augmentation de l'apport d'engrais azotés, et en raison de l'adoption, par un nombre croissant de cultivateurs, de la culture de l'orge d'hiver.

Il est, par ailleurs, toujours souhaitable de réduire les doses de produits chimiques épandus dans l'environnement pour traiter les maladies fongiques des cultures, notamment en réduisant les doses d'application des produits, et d'élargir les possibilités de choix offertes à l'agriculteur, afin que celui-ci trouve la solution la mieux adaptée à son problème particulier.

Un but de l'invention est donc de fournir une nouvelle composition fongicide, utile pour le problème exposé ci-dessus.

Un autre but de l'invention est de proposer une nouvelle composition fongicide utile dans le traitement préventif ou curatif de l'oïdium, de la rouille, de la rhynchosporiose de l'orge.

Un autre but de l'invention est de proposer une composition fongicide présentant une efficacité améliorée, à titre préventif ou curatif, contre l'helminthosporiose de l'orge.

Il a maintenant été trouvé que ces buts pouvaient être atteints en totalité ou en partie grâce à la composition fongicide selon la présente invention, qui permet d'observer des effets synergiques remarquables.

La composition fongicide selon l'invention est caractérisée en ce qu'elle comprend un composé A, répondant à la formule (I) : 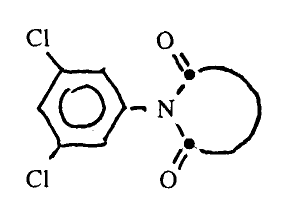 dans laquelle le signe : 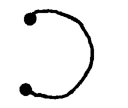 représente l'un des groupements suivants : 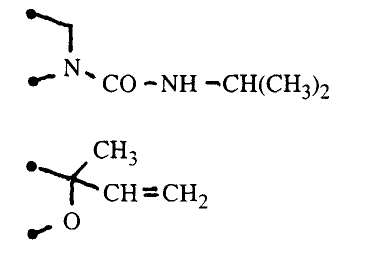 et le bromuconazole comme composé B, les deux composés étant en quantité produisant un effet synergique.

Le composé A, tel que défini ci-dessus, correspond à l'une des matières actives suivantes : iprodione, vinclozoline.

Le bromuconazole est le 1-[4-bromo-2-(2, 4-dichlorophényl) tétrahydro 2-furanylméthyl] 1 H 1,2,4-triazole, qui est décrit dans la demande de brevet européen 0246982. Les autres matières actives précédemment mentionnées sont décrites dans l'ouvrage : "The Pesticide Manual" 9ème édition, de Charles R. Worthing et Raymond J, Hance publié par le British Crop Protection Council.

Cette composition est utile pour le traitement des maladies fongiques de diverses cultures. Elle est ainsi efficace pour traiter l'oïdium, la rouille, la rhynchosporiose, l'helminthosporiose de l'orge ; pour traiter l'oïdium, les rouilles, les septorioses, et les fusarioses du blé. Elle est également efficace pour lutter contre la pourriture grise, l'alternariose, la sclérotiniose, la cercosporiose. l'helminthosporiose, et la fusariose des protéagineux et des oléagineux (notamment le pois, le colza, et le maïs), de même que pour le traitement de maladies du gazon telles que la rouille, la fusariose, la sclérotiniose et le rhizoctone. Elle est enfin efficace pour lutter contre l'alternariose, l'oïdium et la moniliose des arbres fruitiers et pour lutter contre l'alternariose des cultures légumières comprenant notamment la pomme de terre, la tomate, le radis et la carotte.

Le rapport pondéral composé B/composé A , dans la composition selon l'invention, est généralement compris entre 0,05 et 10, de préférence entre 0,08 et 3, et encore plus préférentiellement entre 0,1 et 1.

Selon une variante avantageuse de l'invention, le composé A compris dans la composition selon l'invention est la 3-(3,5-dichlorophenyl)-N-isopropyl-2,4-dioxoimidazolidine-1-carboxamide, encore appelée iprodione.

La composition issue de cette dernière variante prise simultanément est particulièrement avantageuse par son activité performante vis à vis des champignons phytopathogènes, notamment pour les maladies de l'orge, et pour sa sélectivité vis à vis des cultures.

Les compositions selon l'invention sont avantageuses encore par le spectre d'activité et les basses doses utilisables pour les matières actives, cette dernière qualité étant particulièrement importante pour des raisons écologiques aisément compréhensibles.

La composition fongicide selon l'invention contient habituellement 0,5 à 95 % de mélange du composé A et du composé B.

Il peut s'agir de la composition concentrée c'est-à-dire du produit commercial associant les deux matières actives. Il peut s'agir également de la composition diluée prête à être pulvérisée sur la culture à traiter. Dans ce dernier cas la dilution à l'eau peut être effectuée soit à partir d'une composition concentrée commerciale renfermant les deux matières actives (ce mélange est appelé" prêt à l'emploi " ou encore " ready mix ", en langue anglaise), soit au moyen du mélange extemporané (appelé en anglais "tank mix ") de deux compositions concentrées commerciales renfermant chacune une matière active.

La composition selon l'invention peut comprendre en outre tous les additifs ou adjuvants habituels des compositions phytosanitaires, notamment des supports, des tensioactif, des agents d'adhérence et des agents de fluence.

Par le terme "support", dans le présent exposé, on désigne une matière organique ou minérale, naturelle ou synthétique, avec laquelle les matières actives sont associées pour faciliter leur application sur la plante. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques. hydrocarbures chlorés, gaz liquéfiés, etc...).

L'agent tensioactif peut être un agent émulsifiant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est désirable pour favoriser la dispersion des matières actives dans l'eau et leur bonne application sur les végétaux.

Cette composition peut contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, la composition selon l'invention peut inclure tous les additifs solides ou liquides correspondant aux techniques habituelles de la formulation des produits phytosanitaires.

La composition selon l'invention peut être sous forme solide, gélifiée, ou liquide, et dans ce dernier cas sous forme de solutions ou de suspensions ou d'émulsions ou de concentrés émulsionnables. Les compositions liquides sont préférées, tant en raison de leur commodité de mise en oeuvre qu'en raison de leur simplicité de fabrication.

Comme formes de compositions solides, on peut citer les poudres pour poudrage ou dispersion (à teneur en composés actifs pouvant aller jusqu'à 100 %), les poudres mouillables et les granulés pour épandage à sec ainsi que les granulés dispersables ou solubles.

Les poudres mouillables (ou poudres à pulvériser) de même que les granulés dispersables contiennent habituellement 20 à 95 % de matières actives, et en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc... Il est bien entendu que certaines de ces compositions, telles les poudres mouillables ou les granulés dispersables, sont destinées à constituer des compositions liquides lors de l'application.

Comme formes de compositions liquides, on peut citer les solutions, en particulier les concentrés solubles dans l'eau, les concentrés émulsionnables, les émulsions, les suspensions concentrées, les aérosols, les pâtes.

Les concentrés émulsionnables ou solubles comprennent le plus souvent 10 à 80 % de matières actives, les émulsions ou solutions prêtes à l'application contenant, quant a elles, 0.01 à 20 % de matières actives. En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités. A partir de ces concentrés, on peut obtenir par dilution avec de l'eau des émulsions de toute concentration désirée, qui conviennent particulièrement à l'application sur les parties aériennes de la plante à traiter. Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les suspensions concentrées, également applicables en pulvérisation, sont un produit fluide stable, ne donnant pas lieu à un épaississement ou à la formation d'un sédiment après stockage, et elles contiennent habituellement de 10 à 75 % de matières actives, de 0,5 à 15 % d'agents tensioactifs, de 0.1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel les matières actives sont peu ou pas solubles : certaines matières solides organiques ou des sels minéraux peuvent être dissous dans le support pour aider à empêcher la sédimentation ou comme antigels pour l'eau.

La composition selon l'invention est préparée selon des procédés connus en soi.

Ainsi, pour obtenir les poudres à pulvériser ou poudres mouillables, on mélange intimement les matières actives dans des mélangeurs appropriés avec les substances additionnelles et on broie avec des moulins ou autres broyeurs. On obtient par là des poudres à pulvériser dont la mouillabilité et la mise en suspension sont avantageuses : on peut les mettre en suspension avec de l'eau à toute concentration désirée et ces suspensions sont utilisables très avantageusement en particulier pour l'application sur les parties aériennes des végétaux.

A la place des poudres mouillables, on peut réaliser des pâtes ou suspensions concentrées. Les conditions et modalités de réalisation et d'utilisation de ces pâtes sont semblables à celles des poudres mouillables ou poudres à pulvériser, une partie de l'opération de broyage nécessaire étant simplement réalisée en milieu liquide.

Les granulés dispersables sont habituellement préparés par agglomération ou extrusion ou compactage, dans des systèmes de granulation appropriés, de compositions de type poudre mouillable. Les granulés pour épandage à sec sont habituellement obtenus par imprégnation d'un support granulé avec une solution ou une émulsion des matières actives.

L'invention concerne enfin un procédé de traitement destiné à combattre ou prévenir les attaques fongiques des cultures, caractérisé en ce que l'on applique sur les parties aériennes des végétaux une dose efficace et non phytotoxique d'une composition selon l'invention.

Ces compositions sont utilisées avantageusement de manière à ce que la dose appliquée du mélange des composés A et B soit comprise entre 5 et 5000 g/ha, de préférence entre 150 et 3000 g/ha. Cette dose est fonction du végétal traité, du degré d'infestation, et des conditions climatiques.

Parmi les cultures convenant pour le procédé de traitement selon l'invention, on peut citer les céréales, notamment l'orge et le blé ; les protéagineux et oléagineux, tels que les pois, le colza, le tournesol, le maïs le gazon ; les arbres fruitiers et les cultures légumières comprenant notamment la pomme de terre, la tomate, le radis et la carotte. L'orge est une culture préférée pour le procédé de traitement selon l'invention.

Les exemples suivants sont donnés à titre non limitatif des propriétés avantageuses des compositions selon l'invention.

Dans ces exemples, le composé A est l'iprodione et le composé B est le 1-[4-bromo-2-(2, 4-dichlorophényl) tétrahydro 2-furanylméthyl] 1 H 1,2,4-triazole, encore appelé bromuconazole.

Exemple 1 : Test *in vitro* d'une composition comprenant un mélange de bromuconazole et d'iprodione sur *Dreschlera teres* responsable de l'helminthosporiose de l'orge.

Un milieu nutritif consituté de farine de maïs et de gélose est introduit en surfusion dans une série de boîtes de Pétri (20 ml par boîte).

Au cours du remplissage des boîtes, on injecte 200 µl d'une solution des matières actives à tester (seules ou en mélange) dans l'acétone, de manière à obtenir la concentration finale désirée.

On prend comme témoin des boîtes de Pétri analogues aux précédentes, dans lesquelles on coule des quantités similaires d'un milieu nutritif ne contenant pas de matière active.

Après 24 heures, on dépose au centre de chaque boîte une pastille de 5 mm de diamètre, comprenant un fragment de mycélium, prélevée sur une culture mère de *Dreschlera teres*. Les boîtes de Pétri sont conservées à 20 °C pendant 1 semaine.

On compare alors la croissance du champignon (mesurée par le diamètre de la croissance mycélienne ) dans les boîtes contenant la matière active ou le mélange de matières actives à tester, à celle de ce même champignon dans la boîte utilisée comme témoin.

On détermine ainsi pour chaque matière active ou mélange de matières actives, à la dose indiquée, le taux d'inhibition du champignon, exprimé en pourcentage.

Les résultats de taux d'inhibition rassemblés dans le tableau ci-après correspondent à la moyenne de trois répétitions.

| Taux d'inhibition en % | | | | | | | |
|---|---|---|---|---|---|---|---|
| iprodione (doses en mg/l) bromuconazole | 0 | 0,06 | 0,125 | 0,25 | 0.5 | 1 | 2 |
| 0 | 0 | 8,2 | 3,2 | 21,7 | 39,2 | 49,2 | 49,2 |
| 0,03 | 15,7 | | | | | | |
| 0,06 | 14,2 | | 16,7 | | | | |
| 0,125 | 17,5 | 26,8 | 30 | 42,5 | | | |
| 0.25 | 40 | | 49,3 | 56,7 | 68,2 | | |
| 0,5 | 56,7 | | | 81,3 | 75,7 | 89 | |
| 1 | 68,2 | | | | 75,8 | 90,7 | 100 |

Exemple 2 : Test *in vivo* d'une composition comprenant un mélange de bromuconazole et d'iprodione sur *Alternaria brassicae* , responsable de l'alternariose du radis:

On prépare une suspension comprenant le bromuconazole et/ou l'iprodione dans un mélange liquide constitué de 0,3 ml d'un agent tensioactif (oléate de dérivé polyoxyéthyléné du sorbitan) dilué à 10% dans l'eau, et de 40 ml d'eau. Les doses de la (ou des ) matières actives sont indiquées dans le tableau ci-dessous.

Des plants de radis sont cultivés dans des pots remplis de tourbe/pouzzolane. Lorsque ces plants sont parvenus au stade de développement de la première feuille apparente, ils sont traités par pulvérisation de la suspension ci-dessus.

Au bout de 24 heures, on contamine chaque plant par pulvérisation au moyen d'une suspension aqueuse de spores (400000 sp/cm³) de *Alternaria brassicae*.

Après cette contamination, les plants de radis sont mis en incubation pendant 9 jours à 20°C environ en atmosphère saturée d'humidité.

On procède alors à la lecture des résultats, par comparaison avec les plants de radis contaminés sans avoir reçu de traitement fongicide, dit plants témoins.

On détermine ainsi pour chaque matière active ou mélange de matières actives, à la dose indiquée, l'efficacité fongicide exprimée en pourcentage, qui est indiquée dans le tableau ci-dessous.

| iprodione (doses en mg/l) bromuconazole | 0 | 6 | 12 | 25 | 50 | 100 |
|---|---|---|---|---|---|---|
| 0 | 0 | 5 | 15 | 92,5 | 98,2 | 99,5 |
| 25 | 2,5 | 30 | 77,5 | 95 | 99 | 99,5 |
| 50 | 7,5 | | 90 | 92,5 | 97,5 | 100 |
| 100 | 27,5 | | | 97,5 | 100 | 100 |
| 200 | 86,2 | | | | 97 | |

Exemple 3 Test *in vitro* d'une composition comprenant un mélange de bromuconazole et d'iprodione sur *Sclerotinia homeocarpa* responsable de la sclerotiniose du gazon, qualifiée en langue anglaise de "dollar spot"

Un milieu nutritif constitué d'un mélange d'agar, de dextrose, et d'amidon est introduit en surfusion dans une série de boîtes de Pétri (20 ml par boîte).

Au cours du remplissage des boîtes, on injecte 200 µl d'une solution des matières actives à tester (seules ou en mélange) dans l'acétone, de manière à obtenir la concentration finale désirée (indiquée dans le tableau ci-dessous).

On prend comme témoin des boîtes de Pétri analogues aux précédentes, dans lesquelles on coule des quantités similaires d'un milieu nutritif ne contenant pas de matière active.

Après 24 heures, on dépose au centre de chaque boîte une pastille de 5 mm de diamètre, comprenant un fragment de mycélium, prélevé sur une culture mère de *Sclerotinia homeocarpa*. Les boîtes de Pétri sont conservées à 20 °C pendant 4 jours.

On compare alors la croissance du champignon (mesurée par le diamètre de la croissance mycélienne ) dans les boîtes contenant la matière active ou le mélange de matières actives à tester, à celle de ce même champignon dans la boîte utilisée comme témoin.

On détermine ainsi pour chaque matière active ou mélange de matières actives, à la dose indiquée, le taux d'inhibition du champignon, exprimé en pourcentage, qui est indiqué dans le tableau suivant :

| iprodione (doses en mg/l) bromuconazole | 0 | 0,25 | 0.5 | 1 |
|---|---|---|---|---|
| 0 | 0 | 0 | 0 | 89,3 |
| 0,06 | 26,2 | 60,5 | | |
| 0,125 | 26,2 | 66,3 | 83,6 | |
| 0,25 | 32,8 | 72 | 74,1 | 99,4 |
| 0,5 | 82,7 | 98 | 85,6 | 88,5 |
| 1 | 98 | 99,4 | 99,4 | 100 |

## Revendications

1. Composition fongicide caractérisée en ce qu'elle comprend un composé A, répondant à la formule (I) : 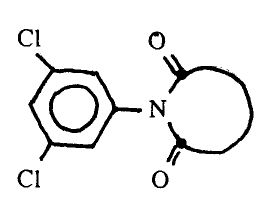 dans laquelle le signe : 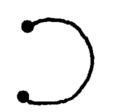 représente l'un des groupements suivants : 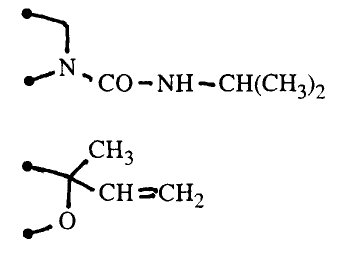 et le bromuconazole, qui est le 1-[4-bromo-2-(2,4-dichlorophenyl)tétrahydro-2-furanylmethyl]-1H-1,2,4-triazole comme composé B, les deux composés étant en quantités produisant un effet synergique.

2. Composition fongicide selon la revendication 1, caractérisée en ce que le rapport pondéral composé B/composé A, est compris entre 0,05 et 10, de préférence entre 0.08 et 3, et encore plus préférentiellement entre 0,1 et 1.

3. Composition fongicide selon l'une des revendications 1 ou 2, caractérisée en ce que le composé A est la 3-(3,5-dichlorophenyl)-N-isopropyl-2,4-dioxoimidazolidine-1-carboxamide, ou iprodione.

4. Composition fongicide selon l'une des revendications 1 à 3, caractérisée en ce qu'elle contient 0,5 à 95 % de mélange du composé A et du composé B.

5. Procédé de traitement destiné à combattre ou prévenir les attaques fongiques des cultures, caractérisé en ce que l'on applique sur les parties aériennes des végétaux une dose efficace et non phytotoxique d'une composition selon l'une des revendications 1 à 4.

6. Procédé de traitement selon la revendication 5 caractérisé en ce que la dose appliquée du mélange des composés A et B est comprise entre 5 et 5000 g/ha, de préférence entre 150 et 3000 g/ha.

7. Procédé de traitement selon l'une des revendications 5 ou 6, caractérisé en ce que les végétaux traités sont les céréales, les protéagineux et oléagineux, le gazon, les arbres fruitiers et les cultures légumières.

8. Procédé de traitement selon l'une des revendications 5 à 7, caractérisé en ce que le végétal traité est l'orge.

## Claims

1. Fungicidal composition, characterized in that it comprises a compound A, corresponding to the formula (I): 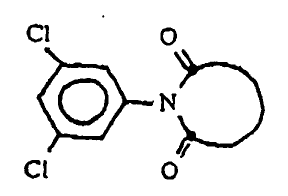 in which the symbol: 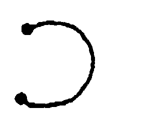 represents one of the following groups: 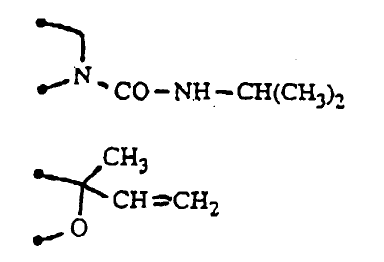 and bromuconazole, which is 1-[4-bromo-2-(2,4-dichlorophenyl)tetrahydro-2-furanylmethyll-1H-1,2,4-triazole, as compound B,
the two compounds being in amounts which produce a synergistic effect.

2. Fungicidal composition according to claim 1, characterized in that the compound B/compound A ratio by weight is between 0.05 and 10, preferably between 0.08 and 3 and more preferably still between 0.1 and 1.

3. Fungicidal composition according to either of claims 1 and 2, characterized in that the compound A is 3-(3,5-dichlorophenyl)-N-isopropyl-2,4-dioxoimidazolidine-1-carboxamide or iprodione.

4. Fungicidal composition according to one of claims 1 to 3, characterized in that it comprises 0.5 to 95% of the mixture of the compound A and of the compound B.

5. Treatment process intended to combat or prevent fungal attacks on crops, characterized in that an effective and non-phytotoxic dose of a composition according to one of claims 1 to 4 is applied to the aerial parts of the plants.

6. Treatment process according to claim 5, characterized in that the dose applied of the mixture of the compounds A and B is between 5 and 5000 g/ha, preferably between 150 and 3000 g/ha.

7. Treatment process according to either of claims 5 and 6, characterized in that the plants treated are cereals, protein-producing plants and oil-producing plants, turf, fruit trees and vegetable crops.

8. Treatment process according to one of claims 5 to 7, characterized in that the plant treated is barley.

## Patentansprüche

1. Fungizide Zusammensetzung, dadurch gekennzeichnet, daß sie eine Verbindung A, die der Formel (I) entspricht: 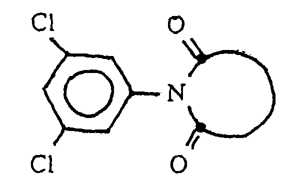 in welcher das Zeichen: 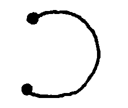 für eine der folgenden Gruppen steht: 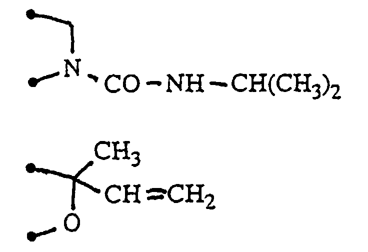 und Bromuconazol, das 1-[4-Brom-2-(2,4-dichlorphenyl)tetrahydro-2-furanylmethyl)-1H-1,2,4-triazol ist, als Verbindung B umfaßt, wobei die zwei Verbindungen in Mengen, die eine synergistische Wirkung erzeugen, vorliegen.

2. Fungizide Zusammensetzung nach Anspruch 1, dadurch gekennzeichnet, daß das Gewichtsverhältnis Verbindung B/Verbindung A zwischen 0,05 und 10, vorzugsweise zwischen 0,08 und 3 und noch mehr bevorzugt zwischen 0,1 und 1 liegt.

3. Fungizide Zusammensetzung nach einem der Ansprüche 1 oder 2, dadurch gekennzeichnet, daß die Verbindung A 3-(3,5-Dichlorphenyl)-N-isopropyl-2,4-dioxoimidazolidin-1-carboxamid oder Iprodion ist.

4. Fungizide Zusammensetzung nach einem der Ansprüche 1 bis 3, dadurch gekennzeichnet, daß sie 0,5 bis 95% der Mischung an Verbindung A und an Verbindung B enthält.

5. Behandlungsverfahren, das dazu bestimmt ist, Angriffe von Kulturland durch Pilze zu bekämpfen oder zu verhindern, dadurch gekennzeichnet, daß man auf die oberirdischen Teile der Pflanzen eine wirksame und nicht-phytotoxische Dosis einer Zusammensetzung nach einem der Ansprüche 1 bis 4 aufbringt.

6. Behandlungsverfahren nach Anspruch 5, dadurch gekennzeichnet, daß die aufgebrachte Dosis der Mischung der Verbindungen A und B zwischen 5 und 5000 g/ha, vorzugsweise zwischen 150 und 3000 g/ha beträgt.

7. Behandlungsverfahren nach einem der Ansprüche 5 oder 6, dadurch gekennzeichnet, daß die behandelten Pflanzen Getreide, proteinhaltige Pflanzen und Ölpflanzen, Graspflanzen, Obstbäume und Gemüsekulturen sind.

8. Behandlungsverfahren nach einem der Ansprüche 5 bis 7, dadurch gekennzeichnet, daß die behandelte Pflanze Gerste ist.
